**Europäisches Patentamt**

**European Patent Office**

**Office européen des brevets**

(19)

(11) **EP 1 154 253 A1**

(12) **EUROPEAN PATENT APPLICATION**

(43) Date of publication:
**14.11.2001 Bulletin 2001/46**

(51) Int Cl.⁷: **G01L 3/14**, G01L 3/24

(21) Application number: **00109196.6**

(22) Date of filing: **09.05.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (71) Applicant: **Sensile Technologies S.A.**<br>**1015 Lausanne (CH)**<br><br>(72) Inventor: **The designation of the inventor has not yet been filed** |

(54) **Power sensing device**

(57)     A power sensing device for bicycles has a wheel member (4) and a displacement sensor (6), the wheel member comprising a hub portion (12), an outer ring portion (14) and a plurality of flexible beam elements (16) interconnecting the hub and outer ring portions and adapted to bend during application of torque on the outer ring or hub portion. The displacement sensor is positioned between the hub and outer ring portions and adapted to measure relative displacement therebetween.

FIG 1

EP 1 154 253 A1

## Description

This invention relates to a device for sensing power applied to a rotatable organ, in particular for bicycles and other human powered sporting apparatuses, such as indoor exercising apparatuses.

In order to compute the power generated by a cyclist, both rotational speed and torque exerted on a driving member, such as the rear wheel hub or pedal hub, need to be determined. Whereas it is easy to measure rotational speed with sufficient accuracy and reliability in a cost-effective manner, the accurate and reliable measurement of torque is problematic. In a known bicycle power sensing device, torque is determined by measuring the bending of the pedal arm by means of strain gauges positioned thereon. In another known device, strain gauges are positioned on a torsion bar of the rear wheel hub. These sensors are not only costly, but lose precision and reliability over time. The strain gauges for example tend to migrate from their original position or even detach from the torsion bar or pedal arm as the resin or adhesive that attaches the gauges thereto ages, particularly considering the harsh environmental conditions that outdoors sporting equipment may be subject to. With regard to outdoor conditions, it is also difficult in conventional devices to compensate accurately for temperature changes. It is also difficult to calibrate the known devices for accurate measurement over the full range of operating temperatures. A further disadvantage of conventional power sensing devices is that they may not be implemented in different bicycle models without costly modifications.

An object of the present invention is to provide a power sensing device that is cost-effective to produce and that functions reliably over time, in particular for use in human exercising apparatuses.

It would be advantageous to provide a power sensing device that functions reliably and accurately in harsh environmental conditions. It would be further advantageous to provide such a sensing device for implementation in bicycles.

It would be advantageous to provide a power sensing device that is easy to implement in different apparatuses.

It would also be advantageous to provide a power sensing device that is compact, robust and light, particularly for outdoor exercising equipment.

Objects of this invention have been achieved by providing a power sensing device according to claim 1.

Disclosed herein is a power sensing device comprising a wheel member and a displacement sensor, the wheel member comprising a hub portion, an outer ring portion and two or more flexible beam elements interconnecting the hub and outer ring portions and adapted to bend during application of torque on the outer ring or hub portion, the displacement sensor being positioned between the hub and outer ring portions and adapted to measure relative displacement therebetween. The sensing device further comprises a rotational speed sensor and a signal processing unit connected thereto and to the displacement sensor in order to compute power driving the wheel member.

The displacement sensor may comprise a cantilever beam extending from an attachment portion to a free end whereby displacement is determined from bending of the beam. The attachment portion may be fixed to the hub portion whereby the free end portion may be positioned proximate the outer ring portion. The free end portion abuts against a shoulder attached or extending from the outer ring portion such that rotation of the outer ring portion relative to the hub portion bends the cantilever beam. The degree of bending and thus displacement may be determined by provision of a wheatstone bridge circuit comprising piezo-resistive elements mounted on or integrated in the cantilever beam. Bending of the beam modifies the resistance of the piezo-resistive elements thereby causing a voltage change across a pair of connection points of the wheatstone bridge which forms the signal corresponding to the degree of bending and thus displacement.

The free end portion of the sensor cantilever beam may be provided with a protuberance, that is in a preferred embodiment substantially spherically shaped, thereby making point contact against the shoulder of the outer ring portion in order to substantially remove the influence of force components other than the normal bending force component and influences due to temperature variations or the wheel member and displacement sensor.

The sensor beam may comprise a sheet metal substrate that has the advantage not only of being robust and resilient, but also cost-effective. Other substrates, for example made of ceramic, may however also be utilised. The wheatstone bridge and piezo-resistive elements may be formed on one side or both sides of the beam, for example by screen printing a paste or an ink thereon having piezo-resistive properties. If a conductive substrate is utilised an insulating layer is provided on the sensor beam, for example a screen printed dielectric layer, or a coating of plastic, varnish or resin.

The flexible beam elements of the wheel member comprise, in a preferred embodiment, a first portion having a profile such that the bending stress therealong is substantially constant.

The flexible beam elements may further comprise a second portion extending from the first portion and having a profile such that the bending stress therealong is substantially constant. The first portion of the flexible beam element extends from the hub portion and the second beam portion extends from the outer ring portion, the first and second beam portions joining at their narrowest portion. The flexible beam element preferably has a substantially constant width and a varying thickness, where the width is the dimension orthogonal to the normal bending direction and the thickness is the dimension substantially parallel to the normal bending direction.

The wheel member may be made of an aluminium alloy, for example as used in certain components for bicycles in view of the high strength to weight ratio.

The wheel member may be provided with mounting portions on or extending integrally from the outer ring portion in order to assemble the wheel member to a chain ring of a bicycle or other rotatable organ to be driven. The wheel member may thus take the place of the crank wheel of a bicycle pedal gear. The wheel member may also be implemented in exercising apparatuses such as rowing machines, bicycle trainers or other sporting equipment with rotating mechanisms.

The signal processing circuit may comprise a circuit board mounted on the wheel member and having a microprocessor interconnected to the displacement sensor and the speed sensor and capable of computing speed, torque and power. The signal processing circuit may further comprise a radio transmitter for wireless transmission of data on speed and torque and/or power to a display unit. The signal processing circuit may further comprise data compression means to limit the required band width for wireless transmission to the display unit.

The rotational speed sensor may comprise a sensing element mounted on the wheel member, but preferably directly on the circuit board of the signal processing circuit, and a complementary element mounted on a support, such as a bicycle frame, on which the wheel member is rotatably mounted. The sensing element, which may for example be a Hall-Effect sensor or a reed contact, produces a signal as it passes the complementary element, which may be a magnet or magnetically permeable element, thereby counting the revolutions per minute. For most purposes, such as in cycling, the speed variation during a revolution is sufficiently small as to be insignificant. If needed, a sensor with more frequent readings, for example by positioning a plurality of complementary elements on the support at regular angular spacing, or a continuous speed sensor could be provided.

Further objects and advantageous features of the invention will be apparent from the claims or the following description and drawings, in which:

Figure 1 is a view of part of a power sensing device according to the invention;

Figure 2 is a cross-sectional view through line II-II figure 1;

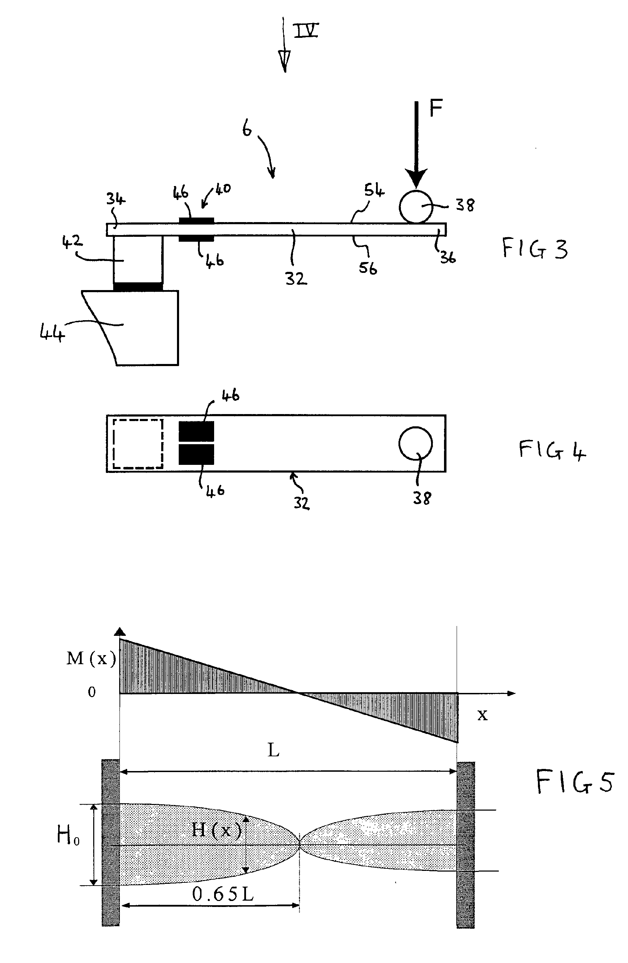

Figure 3 is a view of a displacement sensor of the device of figure 1;

Figure 4 is a view in the direction of arrow IV of figure 3; and

Figure 5 is a graphic illustrating the moment distribution and beam thickness for constant bending stress along a flexible beam element of the wheel member.

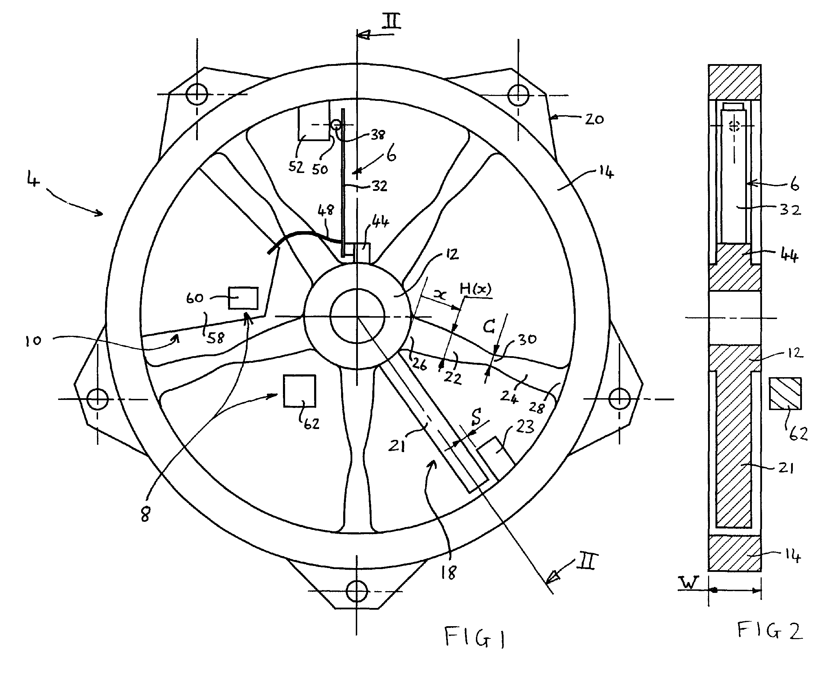

Referring to figure 1, a power sensing device 2 comprises a wheel member 4, a displacement sensor 6, an rotational speed sensor 8 and signal processing means 10.

The wheel member comprises a hub portion 12, an outer ring portion 14, a plurality of flexible beam elements 16 interconnecting the hub and outer ring portions, a stress limiting portion 18 and mounting portions 20.

Each flexible beam element of the wheel member comprises a first portion 22 extending from the hub portion and having a profile such that the internal bending stress therealong, is substantially constant. Each flexible beam element further comprises a second portion 24 extending from the first portion 22 to the outer ring portion 14 and having a profile such that the bending stress therealong is substantially constant. The first and second beam portions are thus thickest at their respective hub and outer ring portion attachment ends 26,28 and narrowest at the neck portion 30 where they meet.

In a preferred embodiment, the flexible beam element preferably has a substantially constant width W and a varying thickness H(x) as a function of the radius x, where the width is the dimension orthogonal to the normal bending direction and the thickness is the dimension substantially parallel to the normal bending direction.

In figure 5, the bending moment M(x) as a function of the position x along a beam extending between the hub portion and outer ring portion subjected to torque is illustrated. The thickness H(x) in order to obtain a constant bending stress is also represented as a function of the position x, and corresponds to the following relationship:

$$H(x) = H_0(|M(x)|/M_0)^{-0.5}$$

where $H_0$ and $M_0$ are the thickness and the bending moment respectively at position x=0 (proximate the hub portion).

The bending stress is zero at the point of inflection of bending curvature of the beam, which is found empirically to be at approximately 0.65 times the total length L of the beam in the present embodiment. In order to join the two beam portions and safely take up the shear stress caused by the application of maximum specified torque and other forces such as inertial forces, the beam must nevertheless have a certain thickness which in this embodiment is defined by a parabola tangent to the beam thickness profiles and passing through a point of defined minimum thickness C of the neck portion 30 at the position where the bending moment M(x) equals zero.

It is also possible to vary the width alone or in combination with the thickness in order to obtain a profile of substantially constant bending stress.

The wheel member may be provided with mounting portions 20 extending integrally from the outer ring portion in order to assemble the wheel member to a chain ring of a bicycle or other rotatable organ or mechanism to be driven. The wheel member may thus take the place of the crank wheel portion of a bicycle pedal gear mechanism, whereby the hub portion 12 is fixed to the pedal arm. Torque applied to the hub portion by the pedalling force of a cyclist is transmitted through the flexible beam elements to the bicycle chain engaging in teeth of the chain ring bolted to the mounting portions 20 or otherwise fixed to the outer ring portion 14.

The wheel member may be made of a high tensile aluminium alloy, for example as used in certain components for bicycles in view of the high strength to weight ratio. Composite materials, for example with carbon fibre, may also be advantageously used.

The stress limiting portion 18, which serves as a mechanical stop to prevent stressing the flexible beam elements 16 beyond their elastic deformation limit, comprises a first extension 21 extending integrally from the hub portion 12 and overlapping a second extension 23 extending integrally inwardly from the outer ring portion 14. The spacing S between the extensions is set to the relative rotational displacement corresponding to the maximum specified torque.

Bending of the flexible beam elements 16 results in relative rotational displacement of the hub portion with respect to the outer ring portion that is measured with the displacement sensor 6 mounted on the hub portion and extending to the outer ring portion. The displacement sensor 6 comprises a cantilever beam element 32 extending from an attachment portion 34 to a free end portion 36, a point contact element 38 mounted on or projecting from the free end portion, and a sensing circuit 40. The attachment portion 34 is rigidly and permanently secured to a mounting block 42, for example by resin adhesive, soldering or riveting, which is removably mounted on a support extension 44 of the hub portion, for example with screws, to enable assembly and if necessary replacement of the displacement sensor. As the bending characteristics of the cantilever beam are effected by the rigidity and mounting precision on its support, provision of the mounting block 42 advantageously enables the attachment of the fixed end of the beam to be precisely and rigidly effected in controlled factory conditions.

The free end portion abuts against a shoulder attached or extending from the outer ring portion such that rotation of the outer ring portion relative to the hub portion bends the cantilever beam. The degree of bending and thus displacement is determined by the sensing circuit which comprises a wheatstone bridge circuit with piezo-resistive elements 46 mounted on or integrated in the cantilever beam 32. Bending of the beam modifies the resistance of the piezo-resistive elements thereby causing a voltage change across a pair of connection points of the wheatstone bridge which forms the signal corresponding to the degree of bending and thus displacement. The sensing circuit is electrically connected to a circuit board of the signal processing circuit by means of a cable 48.

The free end portion of the sensor cantilever beam and in particular the point contact element 38 abuts against a shoulder 50 provided on an extension 52 of the outer ring portion 14. The point contact element 38 engages the shoulder substantially only in a point thereby decoupling the sensor from lateral force components, for example resulting from relative thermal expansion or contraction. The point contact element may thus take various protuberant shapes, but in a preferred embodiment it is substantially spherically shaped and may consist of a metal ball, for example as used in bearings, glued or soldered to the beam. Such balls are not only precisely manufactured, low-cost and easily available, but have a high hardness and a smooth surface finish that minimises the coefficient of friction at the contact, and thus effect of lateral forces on the beam.

The sensor beam may comprise a sheet metal substrate that has the advantage not only of being robust and resilient, but also cost-effective. Other substrates, for example made of ceramic, may however also be utilised.

The wheatstone bridge and piezo-resistive elements 40 may be formed on one side or both sides 54,56 of the sensor beam, for example by screen printing a paste or an ink thereon having piezo-resistive properties. If a conductive substrate is utilised an insulating layer is provided on the sensor beam, for example a screen printed dielectric layer, or a coating of plastic, varnish or resin. The piezo-resistive elements 40 are positioned proximate the attachment portion 34 to maximise the bending strain thereon, but with a small spacing from the mounting block 42 to avoid any adverse influence thereof on the bending strain distribution.

The signal processing circuit 10 comprises a circuit board 58 mounted on the wheel member 4 and having a microprocessor adapted to compute speed, torque and power from the displacement sensor and the speed sensor signals. The signal processing circuit may further comprise a radio transmitter for wireless transmission of data on speed and/or torque and/or power to a display unit, and a data compression unit to reduce the bandwidth required for wireless transmission.

The angular speed sensor 8 comprises a sensing element 60 mounted on the wheel member 4 or, preferably directly on the circuit board 58 of the signal processing means, and a complementary element 62 mounted on a support, such as a bicycle frame, on which the wheel member is rotatably mounted. The sensing element, which may for example be a Hall-Effect sensor or a reed contact, produces a switching signal as it passes the complementary element, which may for example be a protuberance of metal with magnetic permeability or a permanent magnet, thereby counting the revolutions per minute. For most purposes, such as in cycling, the speed variation during a revolution is sufficiently small as to be insignificant. If needed, a sensor with more frequent readings, for example by positioning a plurality of complementary elements on the support at regular angular spacing, or a continuous speed sensor could be provided.

## Claims

1. A power sensing device comprising a wheel member (4) and a displacement sensor (6), the wheel member comprising a hub portion (12), an outer ring portion (14) and two or more flexible beam elements (16) interconnecting the hub and outer ring portions and adapted to bend during application of torque on the outer ring or hub portion, the displacement sensor being positioned between the hub and outer ring portions and adapted to measure relative displacement therebetween.

2. A sensing device according to claim 1 further comprising an angular speed sensor (8) and a signal processing unit (10) connected thereto and to the displacement sensor (6) in order to compute power driving the wheel member (4).

3. A sensing device according to claim 1 or 2 wherein the displacement sensor comprises a cantilever beam (32) extending from an attachment portion (34) to a free end portion (36) whereby displacement is determined from bending of the beam.

4. A sensing device according to claim 3 wherein the attachment portion (34) is fixed to the hub portion (12) and the free end portion (36) is positioned proximate the outer ring portion (14).

5. A sensing device according to claim 4 wherein the free end portion (36) of the sensor cantilever beam is provided with a protuberance (38) for effecting a substantially point contact against a shoulder (50) of the outer ring portion (14).

6. A sensing device according to claim 5 wherein the protuberance (38) consists of a spherically shaped ball.

7. A sensing device according to any one of the preceding claims wherein the displacement sensor comprises a wheatstone bridge circuit comprising piezo-resistive elements mounted on or integrated in a flexible cantilever beam to measure the bending strain thereof.

8. A sensing device according to any one of the preceding claims wherein the flexible beam elements of the wheel member (4) comprise a first portion (22) having a profile such that the bending stress therealong is substantially constant.

9. A sensing device according to the preceding claim wherein the flexible beam elements of the wheel member (4) comprise a second portion (24) having a profile such that the bending stress therealong is substantially constant, the first and second portions extending integrally from the hub and outer ring portions respectively and joining at their narrowest portion.

10. A sensing device according to any one of the preceding claims wherein the flexible beam element has a substantially constant width (W) and a varying thickness (H), where the width is the dimension orthogonal to the normal bending direction and the thickness is the dimension substantially parallel to the normal bending direction.

11. A sensing device according to any one of the preceding claims wherein the wheel member comprises mounting portions extending integrally from the outer ring portion for assembly thereto of a bicycle chain ring.

12. A sensing device according to any one of the preceding claims wherein the angular speed sensor comprises a sensing element mounted on a circuit board of the signal processing circuit fixed to the wheel member, and a complementary element mounted on a support, such as a bicycle frame, on which the wheel member is rotatably mounted.

FIG 2

FIG 1

FIG 3

FIG 4

FIG 5

**European Patent Office**

## EUROPEAN SEARCH REPORT

Application Number

EP 00 10 9196

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2 403 952 A (A.C.RUGE) 16 July 1946 (1946-07-16) * claim 1; figure 1 * | 1 | G01L3/14 G01L3/24 |
| A | US 5 031 455 A (CLINE DAVID J) 16 July 1991 (1991-07-16) * column 5, line 15 – line 57; figure 4 * | 1 | |
| A | US 5 195 383 A (TAKEUCHI KANJI ET AL) 23 March 1993 (1993-03-23) * column 8, line 20 – column 57; figures 31,32 * | 1,3 | |

**TECHNICAL FIELDS SEARCHED (Int.Cl.7)**

G01L

The present search report has been drawn up for all claims

| Place of search | Date of completion of the search | Examiner |
|---|---|---|
| THE HAGUE | 8 November 2000 | Mucs, A |

EPO FORM 1503 03.82 (P04C01)

**ANNEX TO THE EUROPEAN SEARCH REPORT
ON EUROPEAN PATENT APPLICATION NO.** EP 00 10 9196

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2000

| Patent document cited in search report | | Publication date | Patent family member(s) | | Publication date |
|---|---|---|---|---|---|
| US 2403952 | A | 16-07-1946 | NONE | | |
| US 5031455 | A | 16-07-1991 | NONE | | |
| US 5195383 | A | 23-03-1993 | JP | 2884768 B | 19-04-1999 |
| | | | JP | 3223635 A | 02-10-1991 |
| | | | DE | 4038808 A | 13-06-1991 |